(19) Europäisches Patentamt
European Patent Office
Office européen des brevets

(11) Veröffentlichungsnummer: **0 222 255 B1**

(12) # EUROPÄISCHE PATENTSCHRIFT

(45) Veröffentlichungstag der Patentschrift: **26.08.92**

(51) Int. Cl.[5]: **C09B 67/22**, C09B 29/085, D06P 1/18, //D06P3/36

(21) Anmeldenummer: **86115000.1**

(22) Anmeldetag: **29.10.86**

Die Akte enthält technische Angaben, die nach dem Eingang der Anmeldung eingereicht wurden und die nicht in dieser Patentschrift enthalten sind.

(54) **Mischungen blauer Dispersionsfarbstoffe und ihre Verwendung für das Färben von Polyester.**

(30) Priorität: **09.11.85 DE 3539771**

(43) Veröffentlichungstag der Anmeldung: **20.05.87 Patentblatt 87/21**

(45) Bekanntmachung des Hinweises auf die Patenterteilung: **26.08.92 Patentblatt 92/35**

(84) Benannte Vertragsstaaten: **CH DE ES FR GB IT LI**

(56) Entgegenhaltungen:
**DE-B- 2 833 854**
**FR-A- 2 388 861**
**GB-A- 2 002 803**

**CHEMICAL ABSTRACTS, Band 97, Nr. 8, August 1982, Seite 65, Zusammenfassung Nr. 57110t, Columbus, Ohio, US; & JP-A-82 42 767 (NIPPON KAYAKU CO., LTD) 10-03-1982**

**CHEMICAL ABSTRACTS, Band 97, Nr. 6, August 1982, Seite 76, Zusammenfassung Nr. 40307q, Columbus, Ohio, US; & JP-A-82 42 982 (NIPPON KAYAKU CO., LTD) 10-03-1982**

(73) Patentinhaber: **CASSELLA Aktiengesellschaft**
**Hanauer Landstrasse 526**
**W-6000 Frankfurt am Main 61(DE)**

(72) Erfinder: **Tappe, Horst, Dr.**
**Ringstrasse 9**
**W-6057 Dietzenbach(DE)**
Erfinder: **Kruse, Hubert**
**Luisenstrasse 33**
**W-6233 Kelkheim(DE)**
Erfinder: **Kühn, Reinhard**
**Heinrich-Bleich-Strasse 39**
**W-6000 Frankfurt 50(DE)**
Erfinder: **Bode, Albert**
**Finkenweg 1**
**W-6231 Schwalbach(DE)**
Erfinder: **Boos, Margareta**
**Am See 6**
**W-6234 Hattersheim 3(DE)**

(74) Vertreter: **Urbach, Hans-Georg, Dr. et al**
**Hanauer Landstrasse 526**
**W-6000 Frankfurt am Main 61(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine Farbstoffmischung, ein Verfahren zur Herstellung der Farbstoffmischung und ein Verfahren zum Färben und Bedrucken von Synthesefasern unter Verwendung der Farbstoffmischung.

In dem Chemical Abstracts Referat 97:57110t (1982) ist die Jpn. Kokai Tokyo Koho JP 82 42, 767 referiert, wonach Farbstoffe I und II der Formel

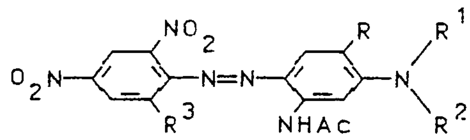

I R = H,
II R = $OCH_2CH_2OMe$,
$R^1$, $R^2$ = H, $C_{1-4}$ Alkyl, mit Ausnahme $R^1$ = $R^2$ = H
$R^3$ = Cl, Br
einzeln oder zusammen zum Färben von Polyesterfasern in marineblauen Tönen verwendet werden.

Aus der FR-A-2388861 ist es bekannt, eine Mischung von zwei Farbstoffen der Formel

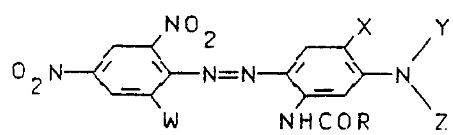

wobei
W Chlor oder Brom,
X Wasserstoff oder $-OR^1$,
R, $R^1$, Y und Z niederes Aklyl
bedeuten, zum Färben von Textilmaterialien aus Polyester oder Polyester-Cellulose-Mischgewebe einzusetzen.

Die Erfindung betrifft eine Farbstoffmischung, enthaltend oder bestehend aus

I: mindestens einem Farbstoff der Formel I

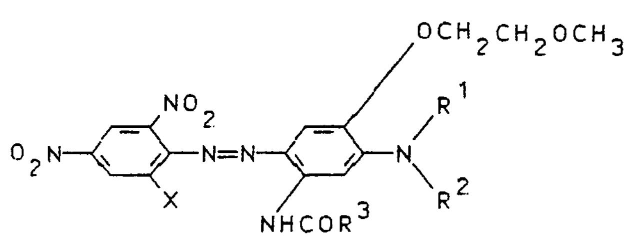

(I)

und

II: mindestens einem Farbstoff der Formel II

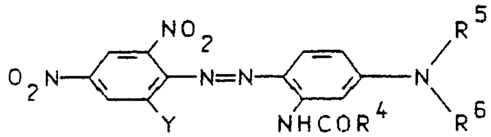

(II)

worin
X und Y gleich oder verschieden sind und Chlor oder Brom,
$R^1$ Wasserstoff oder einen der unter $R^5$ aufgeführten Reste,
$R^2$ Wasserstoff oder einen der unter $R^5$ aufgeführten Reste,
$R^3$ Ethyl, n- oder i-Propyl,
$R^4$ Methyl, Ethyl, n- oder i-Propyl,
$R^5$ und $R^6$ gleich oder verschieden sind und $C_1$- bis $C_{11}$-Alkyl, das gegebenenfalls durch Chlor, Brom, Cyan, Phenyl, Phenoxy, Hydroxy, ($C_1$- bis $C_4$-Alkyl)-carbonyloxy, ($C_1$- bis $C_4$-Alkoxy)-carbonyl, Phenylcarbonyloxy, ($C_3$- bis $C_5$-Alkenyloxy)-carbonyloxy, ($C_1$- bis $C_4$-Alkoxy)-carbonyloxy, Phenoxy-carbonyloxy, Tetrahydrofurfuryl, ($C_1$- bis $C_4$-Alkyl)-tetrahydrofurfuryl, Tetrahydropyronyl oder ($C_1$- bis $C_4$-Alkyl)-tetrahydropyronyl substituiert und/oder gegebenenfalls durch 1 - 3 O-Atome unterbrochen sein kann, $C_1$- bis $C_4$-Alkoxy, $C_3$- oder $C_4$-Alkenyl, Cyclohexyl, gegebenenfalls durch Chlor, Brom, Nitro, Cyan, $C_1$- bis $C_4$-Alkyl oder Alkoxy substituiertes Benzyl bedeuten und wobei das Gewichtsverhältnis zwischen den Komponenten I:II = (20 bis 99) : (80 bis 1) beträgt.

Alkyl-, Alkoxy-, Alkanoyl-, Alkenyl- oder Alkenyloxyreste können, auch wenn sie als Substituenten anderer Reste oder in Verbindung mit anderen Gruppen auftreten, geradkettig oder verzweigt sein. Bei substitutionen können Einfach- oder Mehrfachsubstitutionen auftreten. Bei einer Mehrfachsubstitution ist eine Zweifachsubstitution bevorzugt.

Beispiele für geeignete Reste $R^5$ und $R^6$, die gegebenenfalls auch für $R^1$ und/oder $R^2$ stehen können, sind:
Methyl, Ethyl, n-Propyl, i-Propyl, n-Butyl, i-Butyl, sec.-Butyl, tert.-Butyl, n-Pentyl, i-Pentyl, n-Hexyl, i-Hexyl, 2,3-Dimethyl-butyl, n-Heptyl, i-Heptyl, n-Octyl, i-Octyl, 3-Methyl-heptyl, 2n-Nonyl, i-Nonyl, n-Decyl, i-Decyl, n-Undecyl, i-Undecyl, 2-Methyl-butyl, 2-Ethyl-butyl, 2- oder 3-Methyl-pentyl, 2-Ethyl-hexyl, 2-Chlor-ethyl, 2-Brom-ethyl, 2-Cyan-ethyl, 2-Phenethyl, 3-Chlor-, 3-Brom-, 3-Phenyl-propyl, 2-Hydroxy- oder 2-Phenoxy-ethyl, 2- oder 3-Hydroxy-propyl, 2- oder 3-Hydroxy-butyl, 2- oder 3-Phenoxy-propyl, 2- oder 3-Phenoxy-butyl, 2,3-Dihydroxy-propyl oder -butyl, 3-Chlor-2-hydroxy-propyl, 2-Acetoxy-ethyl, 4-Acetoxy-butyl, 2-Propionyloxy-ethyl, 2-Butyryloxy-ethyl, 4-Butyryloxy-butyl, 2-Methoxycarbonyl-ethyl, 3-Methoxycarbonyl-ethyl, 3-Propoxycarbonyl-propyl, 3-i-Propoxycarbonyl-propyl, 4-Butoxybutyl, 2-Phenylcarbonyloxy-ethyl, 5-Phenylcarbonyloxy-pentyl, 2-Phenoxycarbonyloxy-ethyl, 3-Phenoxycarbonyloxypropyl, 2-Allyloxycarbonyloxy-ethyl, 3-Methallyloxycarbonyloxy-propyl, 4-Propenyloxycarbonyloxy-butyl, 2-(1-, 2- oder 3-Butenyl)-oxycarbonyloxy-ethyl, 2-Methoxycarbonyloxy-ethyl, 3-i-Propoxycarbonyloxy-propyl, 4-Butoxycarbonyloxy-butyl, 2-(2- oder 3-Tetrahydrofurfuryl)-ethyl, 2-(3-Ethyl-tetrahydrofurfur-2-yl)-ethyl, 2-(Tetrahydro-4-pyron-2- oder 3-yl)-ethyl, 3-(2-Ethyl-tetrahydro4-pyron-3-yl)-propyl, 2-Methoxy-ethyl, 3-Methoxy-propyl, 3-Methoxy-2-methyl-propyl, 2-Ethoxy-ethyl, 3-i-Propoxy-propyl, 4-i-Butoxy-2-methyl-propyl, Allyl, Methallyl, Propenyl, Crotyl(=2-Butenyl), 1- oder 3-Butenyl, 2-Hydroxy-3-methoxy-propyl, 2-Hydroxy-3-ethoxy-propyl, 2-Hydroxy-3-i-propoxy-propyl, 2-Hydroxy-3-propoxy-propyl, 2-Hydroxy-3-butoxy-propyl, 2-Hydroxy-3-phenoxy-propyl, 2-Acetoxy-3-methoxy-propyl, 2-Acetoxy-3-ethoxy-propyl, 2-Acetoxy-3-propoxy-propyl, 2-Acetoxy-3-butoxy-propyl, 2-Acetoxy-3-phenoxy-propyl, Methoxy, Ethoxy, n- und i-Propoxy, n- und i-Butoxy, 2-Ethoxy-ethyl, Benzyl, 4-Chlor-, 4-Brom-, 4-Nitro-, 4-Cyan-, 4-Methyl- oder 4-Methoxy-benzyl, 2-, 3- oder 4-Ethoxy-benzyl, 2,3-Dichlorbenzyl, ferner Reste der Formeln: $-CH_2CH_2OCH_2CH_2OC_2H_5$; $-CH_2CH_2OCH_2CH_2OCH_2CH_2OC_2H_5$; $-CH_2CH_2OCH_2CH_2OCH_3$; $-(CH_2CH_2O)_3-CH_3$; $-(CH_2CH_2O)_3$-n-$C_3H_7$; $-(CH_2CH_2O)_3$-i-$C_3H_7$;$-(CH_2CH_2O)_2$-n-$C_4H_9$; $-(CH_2)_3O-(CH_2CH_2O)_2-CH_3$; $-(CH_2CH_2O)_2-C_6H_5$; $-CH_2CH_2O$-n-$C_4H_9$; $-(CH_2CH_2O)_2-CO-CH_3$.

Bevorzugte Reste in den Formeln I und II sind:
für $R^1$: Wasserstoff oder Ethyl, und/oder für $R^2$: Wasserstoff oder Ethyl, und/oder für $R^5$ und $R^6$: gleiches oder verschiedenes $C_1$- bis $C_4$-Alkyl. Ganz besonders bevorzugte Reste sind: für $R^1$: Wasserstoff, und/oder für $R^2$: Wasserstoff oder Ethyl, und/oder für $R^3$: Ethyl, und/oder für $R^4$: Methyl, und/oder für $R^5$: Ethyl und/oder für $R^6$: Ethyl, und/oder für X: Chlor, und/oder für Y: Brom.

In den erfindungsgemäßen Farbstoffmischungen beträgt das Gewichtsverhältnis zwischen den Komponenten I:II = (20 bis 99) : (80 bis 1), vorzugsweise (80 bis 99) : (20 bis 1) und ganz besonders bevorzugt (90 bis 99) : (10 bis 1). Die Komponenten I und II können aus einem, zwei, drei oder mehr Farbstoffen der Formeln I bzw. II bestehen. Vorzugsweise besteht die Komponente II aus einem Farbstoff der Formel II und die Komponente I aus einem oder zwei Farbstoffen der Formel I. Falls die Komponenten I oder II zwei oder mehrere Farbstoffe enthalten, kann deren Anteil innerhalb der beiden Komponenten in weiten Grenzen schwanken. Falls die Komponente I vorzugsweise zwei Farbstoffe der Formel I enthält, ist ein Farbstoff vorzugsweise mit 65 bis 98 Gewichtsteilen und der andere mit 15 bis 30 Gewichtsteilen vorhanden, wobei diese Teile so gewählt werden, daß ihre Summe 80 bis 99 Gewichtsteile beträgt.

Die erfindungsgemäßen Farbstoffmischungen enthalten oder bestehen aus den beiden Komponenten I und II. Die vor stehend genannten Gewichtsverhältnisse beziehen sich lediglich auf den aus den Komponenten I und II bestehenden Farbstoffanteil der erfindungsgemäßen Farbstoffmischungen. Die erfindungsgemäßen Farbstoffmischungen können darüber hinaus auch noch Dispergiermittel, Stellmittel und/oder Hilfsmittel etc. und gegebenenfalls noch andere Farbstoffe enthalten.

Die erfindungsgemäßen Farbstoffmischungen können in Pulver- oder in Teigform vorliegen. Die pulverförmigen Farbstoffzubereitungen besitzen normalerweise einen Farbstoffgehalt von 30 bis 50 Gew.%. Der Rest besteht aus Stell- und/oder Hilfsmitteln, wie z.B. Dispeigiermittel, Netzmittel, Emulgatoren, Entstaubungsmittel etc. Die in wäßriger Suspension vorliegenden teigförmigen Farbstoffzubereitungen besitzen normalerweise einen Farbstoffgehalt von 20 bis 50 Gew.%, einen Stell- und/oder Hilfsmittelgehalt von 20 bis 30 Gew.%, der Rest ist Wasser. Als Hilfsmittel können die teigförmigen Farbstoffzubereitungen neben Dispergiermitteln, Emulgatoren und Netzmittel auch noch Eintrocknungsverzögerer, wie z.B. Glykole oder Glyzerin, und Konservierungsmittel oder Fungizide enthalten.

Die erfindungsgemäßen Farbstoffmischungen können nach verschiedenen Verfahren hergestellt werden, so z.B. durch Mischen von bereits gefinishten Einzelfarbstoffen I und II oder durch Mischen von ungefinishten Einzelfarbstoffen I und II und anschließendem oder während des Mischvorgangs durchgeführtem Finish. Das Mischen von ungefinishten Einzelfarbstoffen der Komponenten I und II wird vorzugsweise unter Zusatz von Dispergiermitteln und gegebenenfalls weiteren Hilfsmitteln durchgeführt. Dieser Mischprozeß erfolgt zweckmäßigerweise im Zusammenhang mit der für den Finish von Dispersionsfarbstoffen durchzuführenden Naßzerkleinerung bei Temperaturen von 0 bis 190°C, zweckmäßigerweise in geeigneten Mühlen, beispielsweise Kolloid-, Kugel-, Perl- oder Sandmühlen oder Dispersionsknetern, kann aber auch insbesondere bei bereits gefinishten Einzelfarbstoffen durch Mischen mit der Hand oder durch Einrühren in Dispergiermittel oder Färbeflotten oder durch Einarbeiten in Druckpasten bewirkt werden.

Bei der Naßzerkleinerung der Farbstoffe werden die Farbstoffe zusammen mit Dispergiermitteln in einem flüssigen Medium, vorzugsweise in Wasser, aufgeschlämmt und die Mischung der Einwirkung von Scherkräften ausgesetzt. Dabei werden die ursprünglich vorhandenen Farbstoff-Teilchen mechanisch so weit zerkleinert, daß eine optimale spezifische Oberfläche erreicht wird und die Sedimentation der Farbstoffe möglichst gering ist. Die Teilchengröße der Farbstoffe liegt im allgemeinen bei etwa 0,1 bis 10$\mu$m.

Die bei der Naßzerkleinerung mitverwendeten Dispergiermittel können nichtionogen oder anionaktiv sein. Nichtionogene Dispergiermittel sind z.B. Umsetzungprodukte von Alkylenoxiden, wie z.B. Ethylen-oder Propylenoxid mit alkylierbaren Verbindungen, wie z.B. Fettalkoholen, Fettsäuren, Phenolen, Alkylphenolen und Carbonsäureamiden. Nichtionogene Dispergiermittel sind z.B. in der DE-A1-2757330 beschrieben. Anionaktive Dispergiermittel sind beispielsweise Ligninsulfonate, Alkyl- oder Alkylarylsulfonate, Alkyl-aryl-polyglykolethersulfate oder Kondensationsprodukte von Naphthalin, Formaldehyd und Schwefelsäure.

Die bei der Naßzerkleinerung erhaltenen Farbstoffdispersionen sollen für die meisten Anwendungsweisen gießbar sein und können auch noch weitere Hilfsmittel enthalten, z.B. solche, die als Oxydationsmittel wirken, wie z.B. Natrium-m-nitrobenzolsulfonat oder fungizide Mittel, wie z.B. Natrium-o-phenyl-phenolat und Natrium-penta-chlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten die Farbstoffe, Dispergiermittel und andere Hilfsmittel, wie z.B. Netz-, Oxydations-, Konservierungs- und Entstaubungsmittel.

Ein Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertroeknung, durch Trocknung auf Walzentrocknern, vorzugsweise aber durch Sprühtrocknung.

Sollen die Farbstoffmischungen für den Textildruck herangezogen werden, so werden die erforderlichen Mengen der Farbstoffeinstellungen zusammen mit Verdickungsmitteln, wie z.B. Alkali-Alginaten oder dergl., und gegebenenfalls weiteren Zusätzen, wie Fixierbeschleunigern, Netzmitteln und Oxydationsmitteln, zu Druckpasten verknetet.

Die Einzelfarbstoffe der Formeln I und II sind bekannt (vergl. z.B. DE-B-27 36 785 und DE-B-28 33 854) oder lassen sich in an sich bekannter Weise durch Diazotierung und Kupplung von 6-Brom-2,4-dinitro-anilin bzw. 6-Chlor-2,4-dinitro-anilin und anschließende Kupplung auf Kupplungskomponenten der Formel Ia

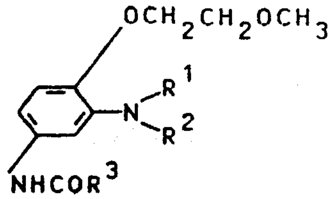

(Ia)

oder der Formel IIa

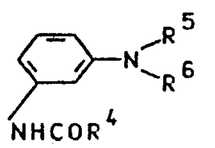

(IIa)

herstellen.

Erfindungsgemäße Farbstoffmischungen können auch durch Diazotierung und anschließende Kupplung hergestellt werden. Dabei wird entweder ein Gemisch von 6-Brom 2,4-dinitro-anilin und 6-Chlor-2,4-dinitroanilin gemeinsam diazotiert und anschließend auf eine Mischung zweier verschiedener Kupplungskomponenten der Formeln Ia und IIa gekuppelt, oder es wird eine Diazokomponente (6-Brom-2,4-dinitro-anilin oder 6-Chlor-2,4-dinitro-anilin) diazotiert und anschließend auf eine Mischung zweier verschiedener Kupplungskomponenten der Formeln Ia und IIa gekuppelt. Die Diazotierung und Kupplung erfolgen dabei in an sich bekannter Weise und das Gemisch dem Farbstoffe kann wie üblich isoliert, getrocknet und auf die bereits erwähnte Art und Weise in eine pulver-oder telgförmige Zubereitung überführt werden.

In den erfindungsgemäßen Farbstoffmischungen können die Farbstoffe auch in Form von Mischkristallen vorliegen. Eine solche Mischkristallbildung erfolgt insbesondere dann, wenn das Farbstoffgemisch im Verlaufe seiner Herstellung oder des anschließenden Finishvorgangs auf Temperaturen von 80 bis 190°C erhitzt worden ist. Eine derartige Erhitzung kann in Wasser in Gegenwart eines oder mehrerer Lösungsmittel, wie z.B. Ethanol oder n-Butanol, oder in Gegenwart eines oder mehrerer Emulgatoren und/oder Dispergiermittel durchgeführt werden.

Die erfindungsgemäßen Farbstoffmischungen sind vorzüglich zum Färben und Bedrucken von hydrophoben synthetischen Fasermaterialien geeignet. Überraschenderweise sind die erfindungsgemäßen Farbstoffmischungen den Einzelfarbstoffen im Hinblick auf färberisches Verhalten und coloristischen Echtheiten überlegen. Die erfindungsgemäßen Farbstoffmischungen zeichnen sich insbesondere durch Temperaturunabhängigkeit des Aufziehverhaltens, gute Baderschöpfung und gutes Aufbauvermögen bis zu hohen Farbtiefen sowie sehr hoher Farbstärke aus. Außerdem sind sie unempfindlich gegenüber Ca-, Mg-, Cu- oder Fe-Ionen, die bei anderen Farbstoffen Ausfällungen bewirken. Mit den erfindungsgemäßen Farbstoffmischungen erhält man auch bei ungünstigen maschinellen oder substratmäßigen Färbebedingungen bereits bei kurzer Färbezeit exakte blaue Färbungen. Dies ist besonders wichtig bei der Anwendung in der Wickelkörper-Färberei. Die Verwendung der erfindungsgemäßen Farbstoffmischungen bzw. Mischkristalle kann für sich (d.h. im Blau-Bereich) sowie auch in Kombination mit handelsüblichen anderen Farbstoffen, auch anderer Nuancen (Trichromie) erfolgen.

Als hydrophobe synthetische Materialien kommen z.B. in Betracht: Cellulose-2 1/2-Acetat, Cellulosetriacetat, Polyamide und besonders hochmolekulare Polyester und deren Mischungen mit natürlichen Faserstoffen, wie z.B. Baumwolle, regenerierten Cellulosefasern oder Wolle.

Als hochmolekulare Polyesterfasern kommen insbesondere solche auf der Basis von Polyethylenterephthalat, Polybutylenterephthalat, Polycylohexylenterephthalat oder Polyhydroxypropylenterephthalat in Betracht, sowie modifizierte Polyesterfasern, wie sie z.B. durch Copolymerisation mit Di- oder Triethylenglykol, Polyethylenglykol, Glyzerin, Isophthalsäure oder Phosphorverbindungen erhalten werden.

In Mischungen hydrophober Faserstoffe mit Wolle, Regeneratcellulose oder Baumwolle kann der Anteil des hydrophoben Materials, insbesondere des Polyesters, 10 bis 90 Gew.%, insbesondere 30 bis 70 Gew.%, betragen.

Zur Herstellung der Färbeflotten werden die erforderlichen Mengen der Farbstoffeinstellungen mit dem Färbemedium, vorzugsweise mit Wasser, so weit verdünnt, daß sich für die Färbung ein Flottenverhältnis

von 1 : 5 bis 1 : 50 ergibt. Zusätzlich werden den Flotten im allgemeinen weitere Färbereihilfsmittel, wie Dispergier-, Netz- und Fixierhilfsmittel, zugesetzt.

Die zu färbenden oder zu bedruckenden Materialien können z.B. in Form von flächen-, flocken-oder fadenförmigen Gebilden vorliegen und z.B. zu Garnen oder gewebten oder gestrickten Textilstoffen verarbeitet sein. Das Färben des genannten Fasergutes mit den erfindungsgemäßen Farbstoffmischungen erfolgt in an sich bekannter Weise, vorzugsweise aus wäßriger Suspension, gegebenenfalls in Gegenwart von Carriern, zwischen 80 bis ca. 125°C nach dem Ausziehverfahren, oder in Abwesenheit von Carriern nach dem HT Verfahren im Färbeautoklav bei etwa 105 bis 140°C, sowie nach dem sogenannten Thermosolverfahren, wobei die Ware mit der Färbeflotte geklotzt und anschließend bei etwa 175 bis 230°C fixiert wird. Das Bedrucken der genannten Materialien kann so durchgeführt werden, daß die mit erfindungsgemäßen Farbstoffmischungen enthaltenden Druckpasten bedruckte Ware zur Fixierung des Farbstoffs, gegebenenfalls in Gegenwart eines Carriers, bei Temperaturen zwischen ca. 110 bis 230°C mit HT-Dampf, Druckdampf oder Trockenhitze behandelt wird.

An die eigentliche Färbung kann sich vorteilhaft eine reduktive oder eine durch Dispergiermittel unterstützte Nachbehandlung zur Entfernung nicht restlos fixierter Farbstoffanteile anschließen.

Bei Einsatz von Mischungen aus Polyesterfasern mit Wolle, Baumwolle oder Regeneratzellulose kann die zugemischte Faser vor oder nach der Polyesterfärbung mit geeigneten Farbstoffen im gleichen oder abweichenden Farbton (Melangen, Webmuster) gefärbt werden.

In erfindungsgemäßen Farbstoffmischungen werden die Einzelfarbstoffe I und II zweckmäßigerweise so zusammengestellt, daß man einen Farbstoff, der z.B. unter Glühlampenlicht einen roten Farbtonumschlag zeigt, mit einem Farbstoff, der z.B. unter Glühlampenlicht einen grünen Farbtonumschlag zeigt, kombiniert. Auf diese Weise kann aus verschiedenen Mischungspartnern eine gezielte Einstellung der Abendfarbe durchgeführt werden.

Besonders bevorzugte Farbstoffmischungen sind solche, die

I) den Farbstoff der Formel III

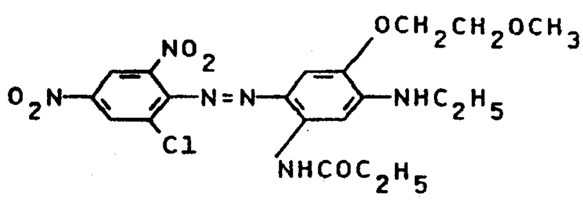

(III)

und

II) den Farbstoff der Formel IV

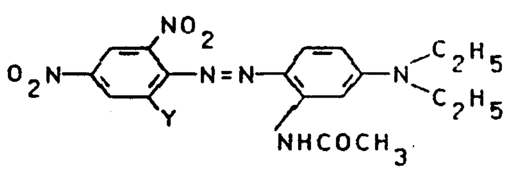

(IV)

im Gewichtsverhältnis I:II = (90 bis 99) : (10 bis 1) enthalten oder aus diesen Farbstoffen bestehen, wobei Y Chlor oder Brom, vorzugsweise Brom, bedeutet.

Bevorzugt sind auch solche erfindungsgemäßen Farbstoffmischungen, die

I) den Farbstoff der Formel V

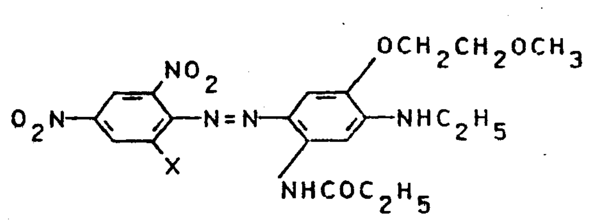

(V)

wobei X Chlor oder Brom, vorzugsweise Chlor bedeutet,
Ia) den Farbstoff der Formel VI

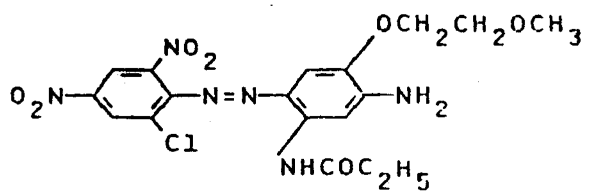

(VI)

II) den Farbstoff der Formel IV

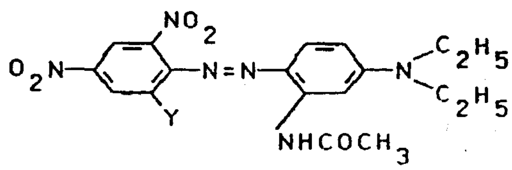

(IV)

wobei Y Chlor oder Brom, vorzugsweise Brom, bedeutet, im Gewichtsverhältnis I:Ia:II = (65 bis 98) : (15 bis 30) : (20 bis 1) enthalten oder aus Ihnen bestehen, wobei das Gewichtsverhältnis (I + Ia) : II = (80 bis 99) : (20 bis 1) beträgt.

Die in den nachfolgenden Beispielen genannten Teile sind, soweit nichts anderes angegeben ist, Gewichtsteile und Prozentangaben bedeuten Gewichtsprozente.

Beispiel 1:

a) 217,5 Teile 6-Chlor-2,4-dinitro-anilin werden in 2000 Teile konzentrierte Schwefelsäure eingetragen. Unter Rühren und Kühlung läßt man bei 15 bis 20°C 320 Teile Nitrosylschwefelsäure (11,5 % $N_2O_3$) langsam zulaufen und rührt mindestens 3 Stunden bei 15°C nach.

b) 266 Teile 2-Ethylamino-4-propionylamino-5(2-methoxy)-ethoxy-benzolwerden in ein Gemisch von 2000 Teilen Wasser, 300 Volumenteilen konzentrierter Salzsäure und 10 Teilen Amidosulfonsäure gegeben. Man fügt 4000 Teile Eis zu und läßt unter gutem Rühren die unter a) bereitete Diazoniumsalzlösung bei -5 bis +3°C langsam zulaufen. Durch Zugabe von Natriumacetat bis zu einem pH-Wert von 3 wird die Umsetzung vervollständigt. Der erhaltene Furbstoff wird abgesaugt, mit Wasser neutral und salzfrei gewaschen und getrocknet. Man erhält 418 Teile des Farbstoffs der Formel III

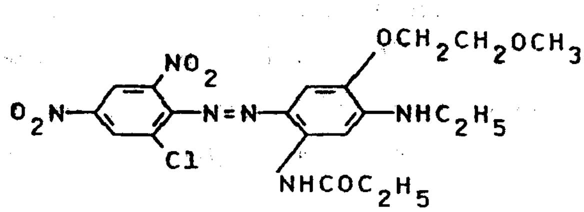

(III)

c) 262 Teile 6-Brom-2,4-dinitro-anilin werden in 2000 Teile konzentrierte Schwefelsäure eingetragen. Verfährt man im übrigen wie im Beispiel 1a) angegeben, so erhält man eine Diazoniumsalzlösung von 6-Brom-2,4-dinitro-anilin.

d) Aus 266 Teilen N,N-Diethyl-N'-acetyl-m-phenylendiamin erhält man aus dem Diazoniumsalz aus Beispiel 1c) nach dem Verfahren 1b) 431 g des Farbstoffs der Formel VII

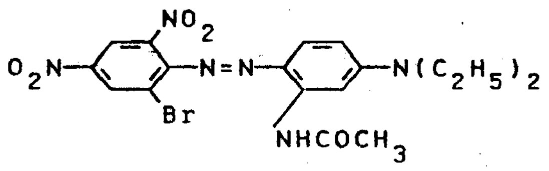

(VII)

e) Aus 38,5 Teilen des Farbstoffs der Formel III, 2,8 Teilen des Farbstoffs der Formel VII und 58,7 Teilen eines Dispergiermittels aus der Reihe der Ligninsulfonate stellt man durch wäßriges Vermahlen in einer Perlmühle eine feine Farbstoffdispersion her und trocknet diese danach durch Sprühtrocknung.

Für das anschließende Färben verwendet man 100 Teile einer PES-Faser (Polyethylenterephthalat-Typ) und gibt diese als Garn in einen Färbebecher, welcher 2000 Teile Wasser von 60°C, 2 Teile kristallisiertes Natriumacetat, 3 Teile 30%ige Essigsäure und 5 Teile eines handelsüblichen Carriers auf Basis von Diphenyl und 1 Teil der oben beschriebenen Färbepräparation enthält. Man erwärmt innerhalb von 30 Minuten auf 100°C und beläßt 60 Minuten hierbei. Anschließend wird abgekühlt, gespült, getrocknet und 30 Sekunden bei 150°C trocken nacherhitzt.

Man erhält eine farbstarke blaue Färbung mit hoher Lichtechtheit und mit kaum merklichem Restfarbstoffgehalt im verbleibenden Färbebad. Beim HT-Färben bei 125 bis 135°Cist die Farbtiefe nur wenig von der Temperatur abhängig.

Beispiel 2:

217,5 Teile 6-Chlor-2,4-dinitro-anilin werden wie unter 1a) diazotiert und analog 1b) auf eine Mischung von 59,5 Teilen 2-Amino-4-propionylamino-5(2-methoxy)-ethoxy-benzol und 199,5 Teilen 2-Ethylamino-4-propionylamino-5(2-methoxy)-ethoxy-benzol gekuppelt. Man erhält einen Mischfarbstoff, der 25 Teile des Farbstoffs der Formel VI

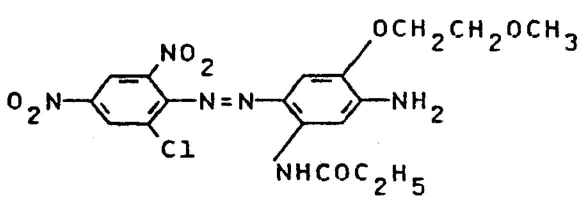

(VI)

und 75 Teile des Farbstoffs der Formel III enthält.

Man stellt, wie im Beispiel 1e beschrieben, aus 40,2 Teilen des erhaltenen Mischfarbstoffs (diese Menge enthält 10,05 Teile des Farbstoffs der Formel VI und 30,15 Teile des Farbstoffs dei Formel III) und 0,8 Teilen des Farbstoffs der Formel VII und 59 Teilen eines praxisüblichen Dispergiermittels aus der Reihe der sulfonierten Naphthalin-Formaldehyd-Kondensationsprodukte durch wäßriges Vermahlen in einer Perlmühle eine feine Farbstoffdispersion her und trocknet diese anschließend durch Sprühtrocknung.

Beispiel 3:

Mit den in den Beispielen 1 und 2 beschriebenen Farbstoffpräparationen werden folgende Versuche durchgeführt:

100 Teile einer PES-Faser (Polyethylenterephthalat-Typ) werden als Stückware in eine Färbebombe gegeben, welche 1000 Teile Wasser von 60°C, 2 Teile kristallisiertes Natriumacetat, 3 Teile 30%ige Essigsäure und 2 Teile der genannten Farbstoffpräparation enthält. Man erhitzt innerhalb von 30 Minuten

auf 130°C und beläßt 15 Minuten hierbei. Nach dem Abkühlen, Spülen mit Wasser, reduktivem wäßrigen Nachreinigen mit Natriumdithionit/Natronlauge bei 80°C erhält man eine tiefblaue Färbung, ohne daß merkliche Farbstoffmengen im Färbebad zurückbleiben.

Beispiel 4:

Verwendet man anstelle der im Beispiel 1 genannten 100 Teile PES-Faser eine innige Mischung aus 50 Teilen PES-Faser und 50 Teilen Baumwolle oder Regenratzellulosefasern in Garn-Form und verfährt man im übrigen wie im Beispiel 1 beschrieben, so erhält man auf dem PES-Anteil eine tiefblaue Färbung bei nur geringer Anfärbung des Baumwoll- bzw. Regeneratzellulosefaser-Anteils.

Durch eine Nachbehandlung während 15 Minuten bei 80°C mit einer wäßrigen Flotte, welche eine übliche Menge Natriumdithionit und Natronlauge enthält, wird der Baumwoll-bzw. Regeneratzellulosefaser-Anteil völlig entfärbt.

Beispiel 6:

Ersetzt man die im Beispiel 1 genannten 100 Teile PES-Faser des Polyethylenterephthalat-Typs durch eine handelsübliche PES-Faser eines beliebigen anderen Typs, so erhält man ein gleich gutes Färberesultat.

Beispiel 7:

Führt man gemäß den Angaben des Beispiels 1 die Färbung mit einem PES-Faser-Wickelkörper (Muff mit einer Wickeldichte von 300 g/1) so durch, daß man mit einseitiger Flottenzirkulation von innen nach außen und mit einem Färbeflottendurchsatz von 10 $1.kg^{-1}.min^{-1}$ mit einer Aufheizgeschwindigkeit zwischen 60 und 130°C von 2°/min und mit einer Färbedauer bei 13o°C von 15 min arbeitet, so erhält man eine völlig egale Färbung.

**Patentansprüche**

**Patentansprüche für folgende Vertragsstaaten : CH, LI, DE, FR, GB, IT**

**1.** Farbstoffmischung enthaltend oder bestehend aus
I: mindestens einem Farbstoff der Formel I

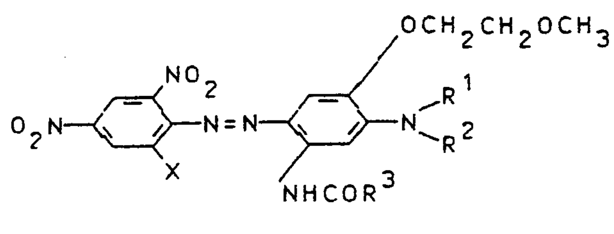

(I)

und
II: mindestens einem Farbstoff der Formel II

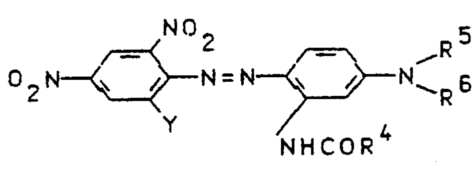

(II)

worin
X und Y gleich oder verschieden sind und Chlor oder Brom,
$R^1$ Wasserstoff oder einen der unter $R^5$ aufgeführten Reste,
$R^2$ Wasserstoff oder einen der unter $R^5$ aufgeführten Reste,
$R^3$ Ethyl, n- oder i-Propyl,

$R^4$ Methyl, Ethyl, n-oder i-Propyl,
$R^5$ und $R^6$ gleich oder verschieden sind und $C_1$- bis $C_{11}$-Alkyl, das gegebenenfalls durch Chlor, Brom, Cyan, Phenyl, Phenoxy, Hydroxy, ($C_1$- bis $C_4$-Alkyl)-carbonyloxy, ($C_1$- bis $C_4$-Alkoxy)-carbonyl, Phenylcarbonyloxy, ($C_3$- bis $C_5$-Alkenyloxy)-carbonyloxy, ($C_1$- bis $C_4$-Alkoxy)-carbonyloxy, Phenoxy-carbonyloxy, Tetrahydrofurfuryl, ($C_1$- bis $C_4$-Alkyl)-tetrahydrofurfuryl, Tetrahydropyronyl oder ($C_1$- bis $C_4$-Alkyl)-tetrahydropyronyl substituiert und/oder gegebenenfalls durch 1 - 3 O-Atome unterbrochen sein kann, $C_1$- bis $C_4$-Alkoxy, $C_3$- oder $C_4$-Alkenyl, Cyclohexyl, gegebenenfalls durch Chlor, Brom, Nitro, Cyan, $C_1$-bis $C_4$-Alkyl oder Alkoxy substituiertes Benzyl bedeuten und wobei das Gewichtsverhältnis zwischen den Komponenten I:II = (20 bis 99) : (80 bis 1) beträgt.

**2.** Farbstoffmischung nach Anspruch 1, dadurch gekennzeichnet, daß
$R^1$ Wasserstoff oder Ethyl und/oder
$R^2$ Wasserstoff oder Ethyl und/oder
$R^5$ und $R^6$ gleiches oder verschiedenes $C_1$- bis $C_4$-Alkyl bedeuten.

**3.** Farbstoffmischung nach Anspruch 1 und/oder 2, dadurch gekennzeichnet, daß
$R^1$ Wasserstoff und/oder
$R^2$ Wasserstoff oder Ethyl und/oder
$R^3$ Ethyl und/oder
$R^4$ Methyl und/oder
$R^5$ Ethyl und/oder
$R^6$ Ethyl und/oder
X Chlor und/oder
Y Brom bedeuten.

**4.** Farbstoffmischung nach einem oder mehreren der Ansprüche 1 bis 3, dadurch gekennzeichnet, daß das Gewichtsverhältnis zwischen den Komponenten I : II = (80 bis 99) : (20 bis 1), vorzugsweise (90 bis 99) : (10 bis 1), beträgt.

**5.** Farbstoffmischung nach einem oder mehreren der Ansprüche 1 bis 4, dadurch gekennzeichnet, daß sie
I) den Farbstoff der Formel III

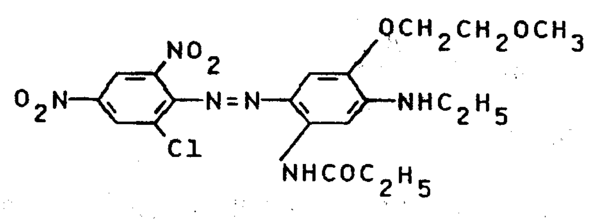

(III)

und
II) den Farbstoff der Formel IV

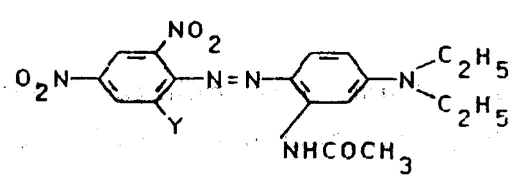

(IV)

im Gewichtsverhältnis I:II = (90 bis 99) : (10 bis 1) enthält oder aus diesen Farbstoffen besteht.

**6.** Farbstoffmischung nach einem oder mehreren der Ansprüche 1 bis 5, dadurch gekennzeichnet, daß
I) den Farbstoff der Formel V

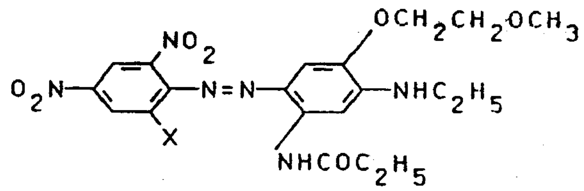

(V)

Ia) den Farbstoff der Formel VI

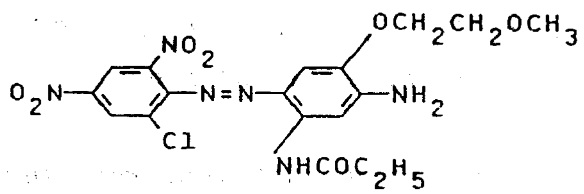

(VI)

II) den Farbstoff der Formel IV

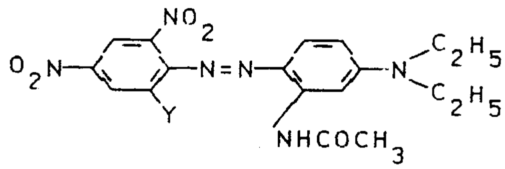

(IV)

im Gewichtsverhältnis I:Ia:II = (65 bis 98) : (15 bis 30) : (20 bis 1) enthält oder aus diesen Farbstoffen besteht, wobei das Gewichtsverhältnis (I + Ia) : II = (80 bis 99) : (20 bis 1) beträgt.

**7.** Farbstoffmischung nach einem oder mehreren der Ansprüche 1 bis 4, dadurch gekennzeichnet, daß sie I) den Farbstoff der Formel III

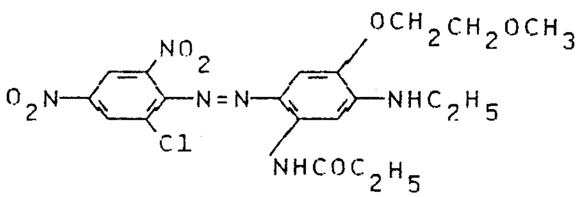

(III)

und

II) den Farbstoff der Formel VII

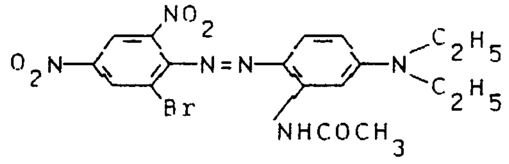

(VII)

im Gewichtsverhältnis I:II = (90 bis 99) : (10 : 1) enthält oder aus diesen Farbstoffen besteht.

**8.** Farbstoffmischung nach einem oder mehreren der Ansprüche 1 bis 4, dadurch gekennzeichnet, daß sie I) den Farbstoff der Formel III

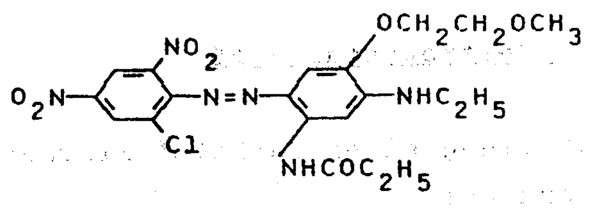

(III)

Ia) den Farbstoff der Formel VI

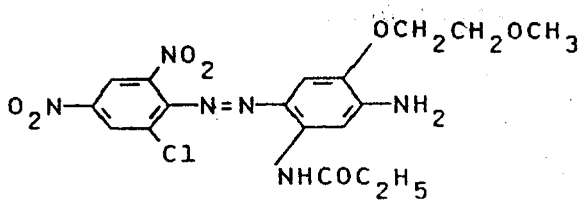

(VI)

II) den Farbstoff der Formel VII

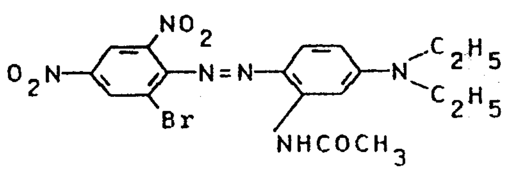

(VII)

im Gewichtsverhältnis I:Ia:II = (65 bis 98) : (15 bis 2) : (20 bis 1) enthält oder aus diesen Farbstoffen besteht, wobei das Gewichtsverhältnis (I + Ia) : II = (80 bis 99) : (20 bis 1) beträgt.

**9.** Verfahren zur Herstellung einer Farbstoffmischung eines oder mehrerer der Ansprüche 1 bis 8, dadurch gekennzeichnet, daß bereits gefinishte Einzelfarbstoffe der Komponenten I und II miteinander gemischt oder daß ungefinishte Einzelfarbstoffe der Komponenten I und II miteinander gemischt und anschließend oder während des Mischens gefinisht werden.

**10.** Verfahren zum Färben und Bedrucken von Synthesefasern, dadurch gekennzeichnet, daß eine Farbstoffmischung nach einem oder mehreren der Ansprüche 1 bis 8 eingesetzt wird.

**Patentansprüche für folgenden Vertragsstaat : ES**

**1.** Verfahren zur Herstellung einer Farbstoffmischung enthaltend oder bestehend aus
I: mindestens einem Farbstoff der Formel I

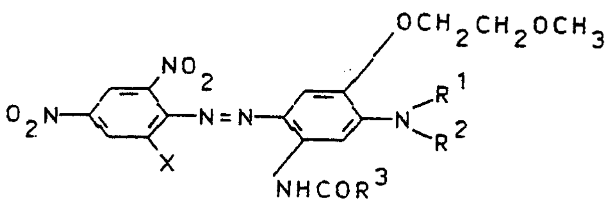

(I)

und
II: mindestens einem Farbstoff der Formel II

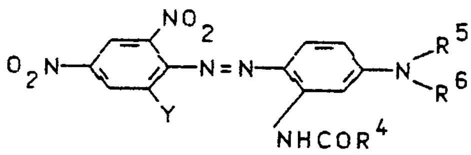

(II)

worin
X und Y gleich oder verschieden sind und Chlor oder Brom,
$R^1$ Wasserstoff oder einen der unter $R^5$ aufgeführten Reste,
$R^2$ Wasserstoff oder einen der unter $R^5$ aufgeführten Reste,
$R^3$ Ethyl, n- oder i-Propyl,
$R^4$ Methyl, Ethyl, n- oder i-Propyl,
$R^5$ und $R^6$ gleich oder verschieden sind und $C_1$- bis $C_{11}$-Alkyl, das gegegenenfalls durch Chlor, Brom, Cyan, Phenyl, Phenoxy, Hydroxy, ($C_1$- bis $C_4$-Alkyl)-carbonyloxy, ($C_1$- bis $C_4$-Alkoxy)-carbonyl, Phenylcarbonyloxy, ($C_3$- bis $C_5$-Alkenyloxy)-carbonyloxy, ($C_1$- bis $C_4$-Alkoxy)-carbonyloxy, Phenoxy-carbonyloxy, Tetrahydrofurfuryl, ($C_1$- bis $C_4$-Alkyl)-tetrahydrofurfuryl, Tetrahydropyronyl oder ($C_1$- bis $C_4$-Alkyl)-tetrahydropyronyl substituiert und/oder gegebenenfalls durch 1 - 3 O-Atome unterbrochen sein kann, $C_1$- bis $C_4$-Alkoxy, $C_3$- oder $C_4$-Alkenyl, Cyclohexyl, gegebenenfalls durch Chlor, Brom, Nitro, Cyan, $C_1$- bis $C_4$-Alkyl oder Alkoxy substituiertes Benzyl bedeuten, dadurch gekennzeichnet, daß bereits gefinishte Einzelfarbstoffe der Komponenten I und II im Gewichtsverhältnis Komponente I : II = (20 bis 99) : (80 bis 1) miteinander gemischt, oder daß ungefinishte Einzelfarbstoffe der Komponenten I und II im Gewichtsverhältnis Komponente I : II = (20 bis 99) : (80 bis 1) miteinander gemischt und-anschießend oder während des Mischens gefinisht werden.

2. Verfahren nach Anspruch 1, dadurch gekennzeichnet, daß die Komponenten I und II so ausgewählt werden, daß
$R^1$ Wasserstoff oder Ethyl und/oder
$R^2$ Wasserstoff oder Ethyl und/oder
$R^5$ und $R^6$ gleiches oder verschiedenes $C_1$- bis $C_4$-Alkyl bedeuten.

3. Verfahren nach Anspruch 1 und/oder 2, dadurch gekennzeichnet, daß die Komponenten I und II so ausgewählte werden, daß
$R^1$ Wasserstoff und/oder
$R^2$ Wasserstoff oder Ethyl und/oder
$R^3$ Ethyl und/oder
$R^4$ Methyl und/oder
$R^5$ Ethyl und/oder
$R^6$ Ethyl und/oder
X Chlor und/oder
Y Brom bedeuten.

4. Verfahren nach einem oder mehreren der Ansprüche 1 bis 3, dadurch gekennzeichnet, daß die Farbstoffe der Komponenten I und II = (80 bis 99) : (20 bis 1), vorzugsweise (90 bis 99) : (10 bis 1), miteinander gemischt werden.

5. Verfahren nach einem oder mehreren der Ansprüche 1 bis 4, dadurch gekennzeichnet, daß die Komponente I aus dem Farbstoff der Formel III

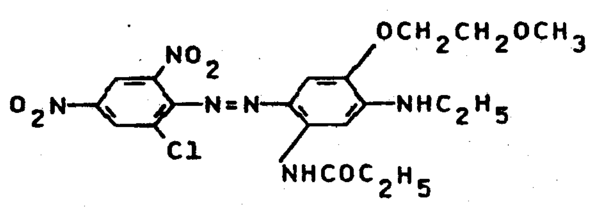

(III)

besteht oder diesen Farbstoff enthält und die Komponente II aus dem Farbstoff der Formel IV

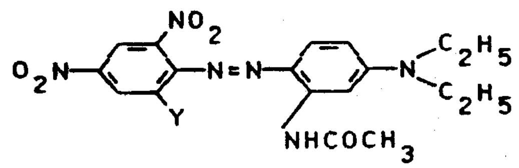

(IV)

besteht oder diesen Farbstoff enthält und daß die Komponenten I und II im Gewichtsverhältnis I:II = (90 bis 99) : (10 bis 1) miteinander gemischt werden.

6. Verfahren nach einem oder mehreren der Ansprüche 1 bis 5, dadurch gekennzeichnet, daß die Komponente I aus dem Farbstoff der Formel V

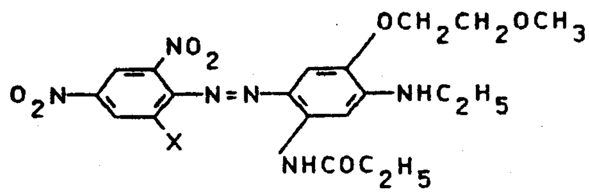

(V)

besteht oder diesen Farbstoff enthält und daß die Komponente Ia aus dem Farbstoff der Formel VI

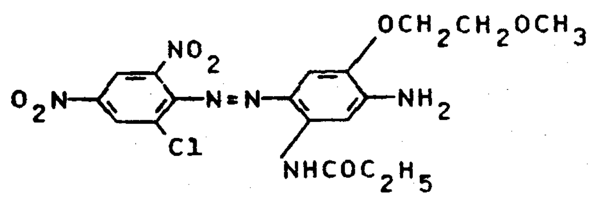

(VI)

besteht oder diesen Farbstoff enthält und daß die Komponente II aus dem Farbstoff der Formel IV

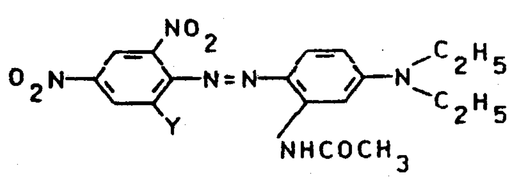

(IV)

besteht oder diesen Farbstoff enthält und daß die Komponenten I, Ia und II im Gewichtsverhältnis I:Ia:II = (65 bis 98) : (15 bis 30) : (20 bis 1) miteinander gemischt werden, wobei das Gewichtsverhältnis (I + Ia) : II = (80 bis 99) : (20 bis 1) beträgt.

7. Verfahren nach einem oder mehreren der Ansprüche 1 bis 4, dadurch gekennzeichnet, daß die Komponente I aus dem Farbstoff der Formel III

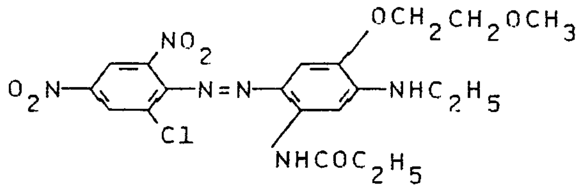

(III)

besteht oder diesen Farbstoff enthält und die Komponente II aus dem Farbstoff der Formel VII

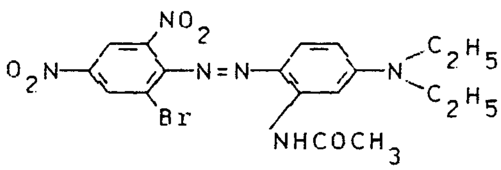

(VII)

besteht oder diesen Farbstoff enthält und daß die Komponenten I und II im Gewichtsverhältnis I:II = (90 bis 99) : (10 : 1) miteinander gemischt werden.

**8.** Verfahren nach einem oder mehreren der Ansprüche 1 bis 4, dadurch gekennzeichnet, daß die Komponente I aus dem Farbstoff der Formel III

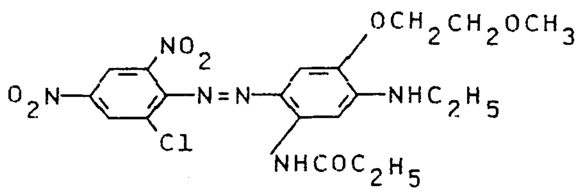

(III)

besteht oder diesen Farbstoff enthält und daß die Komponente Ia aus dem Farbstoff der Formel VI

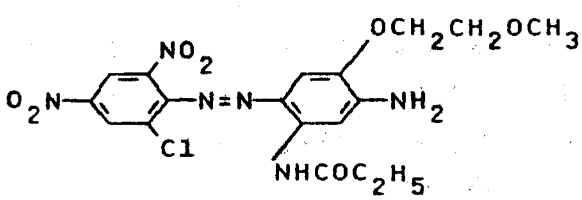

(VI)

besteht oder diesen Farbstoff enthält und daß die Komponente II aus dem Farbstoff der Formel VII

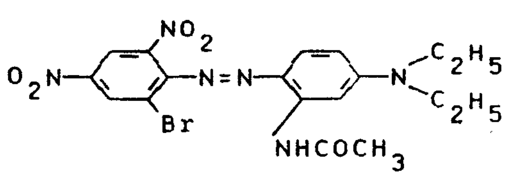

(VII)

besteht oder diesen Farbstoff enthält und daß die Komponenten I, Ia und II im Gewichtsverhältnis I:Ia:II = (65 bis 98) : (15 bis 2) : (20 bis 1) miteinander gemischt werden, wobei das Gewichtsverhältnis (I + Ia) : II = (80 bis 99) : (20 bis 1) beträgt.

**9.** Verfahren zum Färben und Bedrucken von Synthesefasern, dadurch gekennzeichnet, daß eine Farbstoffmischung eingesetzt wird, die nach einem Verfahren eines der Ansprüche 1 bis 8 hergestellt

worden ist.

**Claims**

**Claims for the following Contracting States : CH, LI, DE, FR, GB, IT**

1. Dyestuff mixture containing or consisting of
I: at least one dyestuff of the formula I

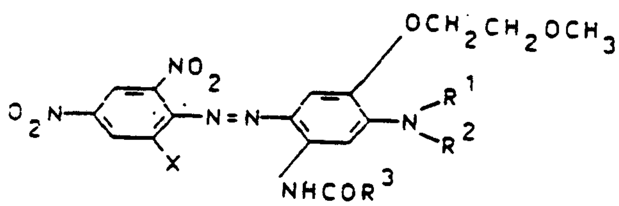

(I)

and
II: at least one dyestuff of the formula II in which

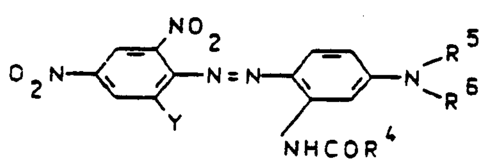

(II)

X and Y are identical or different and denote chlorine or bromine,
$R^1$ denotes hydrogen or one of the radicals Listed under $R^5$,
$R^2$ denotes hydrogen or one of the radicals listed under $R^5$,
$R^3$ denotes ethyl, n- or i-propyl, $R^4$ denotes methyl, ethyl, n- or i-propyl,
$R^5$ and $R^6$ are identical or different and denote $C_1$-to-$C_{11}$-alkyl which can be substituted by chlorine, bromine, cyano, phenyl, phenoxy, hydroxyl, ($C_1$-to-$C_4$-alkyl)-carbonyloxy, ($C_1$-to-$C_4$-alkoxy)-carbonyl, phenylcarbonyloxy, ($C_3$-to-$C_5$-alkenyloxy)-carbonyloxy, ($C_1$-to-$C_4$-alkoxy)-carbonyloxy, phenoxycarbonyloxy, tetrahydrofurfuryl, ($C_1$-to-$C_4$-alkyl)-tetrahydrofurfuryl, tetrahydropyronyl or ($C_1$-to-$C_4$-alkyl)-tetrahydropyronyl and/or be interrupted by 1 - 3 O-atoms, $C_1$-to-$C_4$-alkoxy, $C_3$ or $C_4$-alkenyl, cyclohexyl, optionally chlorine-, bromine-, nitro-, cyano-, $C_1$-to-$C_4$-alkyl- or alkoxy-substituted benzyl and where the weight ratio between components I:II = (20 to 99) : (80 to 1).

2. Dyestuff mixture according to Claim 1, characterized in that
$R^1$ denotes hydrogen or ethyl and/or
$R^2$ denotes hydrogen or ethyl and/or
$R^5$ and $R^6$ denote identical or different $C_1$ to $C_4$ alkyl.

3. Dyestuff mixture according to Claim 1 and/or 2, characterized in that
$R^1$ denotes hydrogen and/or
$R^2$ denotes hydrogen or ethyl and/or
$R^3$ denotes ethyl and/or
$R^4$ denotes methyl and/or
$R^5$ denotes ethyl and/or
$R^6$ denotes ethyl and/or
X denotes chlorine and/or
Y denotes bromine.

4. Dyestuff mixture according to one or more of Claims 1 to 3, characterized in that the weight ratio between components I : II = (80 to 99) : (20 to 1), preferably (90 to 99) : (10 to 1).

5. Dyestuff mixture according to one or more of Claims 1 to 4, characterized in that it contains or consists of
I) the dyestuff of the formula III

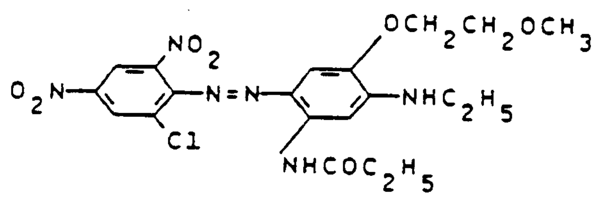

(III)

and
II) the dyestuff of the formula IV

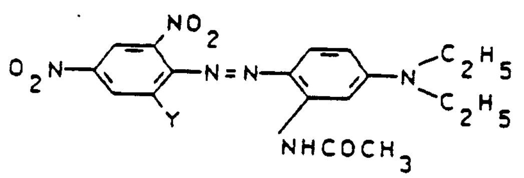

(IV)

in a weight ratio of I:II = (90 to 99) : (10 to 1).

6. Dyestuff mixture according to one or more of Claims 1 to 5, characterized in that it contains or consists of
I) the dyestuff of the formula V

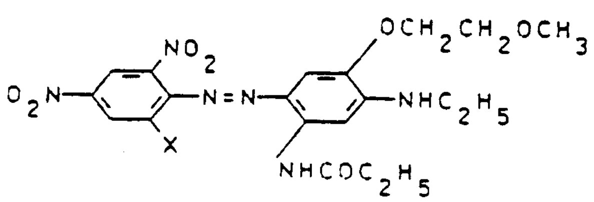

(V)

Ia) the dyestuff of the formula VI

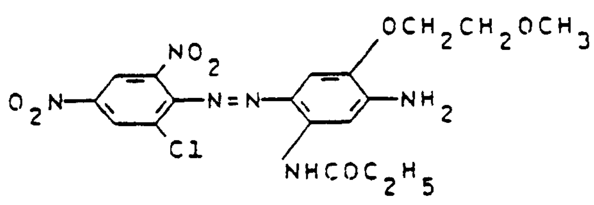

(VI)

II) the dyestuff of the formula IV

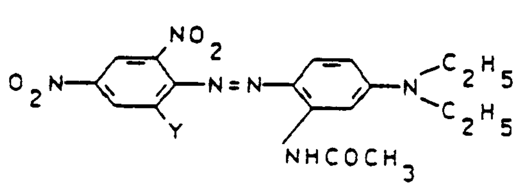

(IV)

in a weight ratio of I:Ia:II = (65 to 98) : (15 to 30) : (20 to 1), the weight ratio of (I + Ia) : II being (80 to 99) : (20 to 1).

**7.** Dyestuff mixture according to one or more of Claims 1 to 4, characterized in that it contains or consists of

I) the dyestuff of the formula III

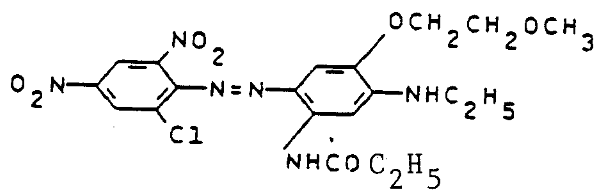

(III)

and

II) the dyestuff of the formula VII

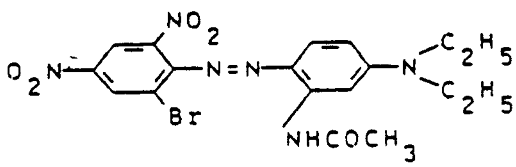

(VII)

in a weight ratio of I:II = (90 to 99) : (10 to 1).

**8.** Dyestuff mixture according to one or more of Claims 1 to 4, characterized in that it contains or consists of

I) the dyestuff of the formula III

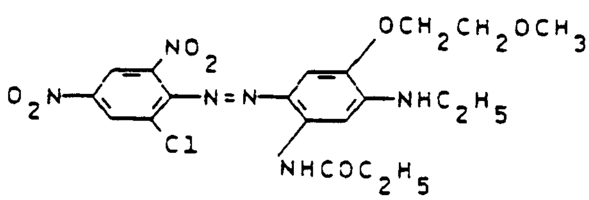

(III)

Ia) the dyestuff of the formula VI

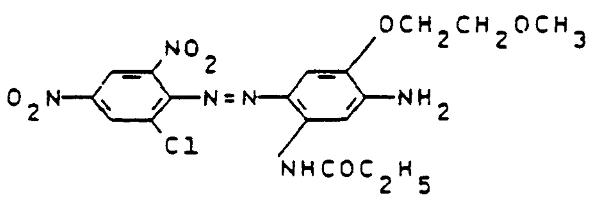

(VI)

II) the dyestuff of the formula VII

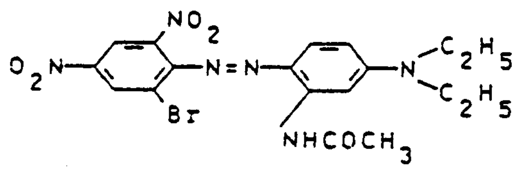 (VII)

in a weight ratio of I:Ia:II = (65 to 98) : (15 to 2) : (20 to 1), the weight ratio of (I + Ia):II being (80 to 99) : (20 to 1).

**9.** Process for preparing a dyestuff mixture of one or more of Claims 1 to 8, characterized in that previously finished individual dyes of components I and II are mixed with one another or that unfinished individual dyes of components I and II are mixed with one another and are finished subsequently or during the mixing.

**10.** Process for dyeing and printing synthetic fibres, characterized in that a dyestuff mixture according to one or more of Claims 1 to 8 is used.

**Claims for the following Contracting State : ES**

**1.** Process for preparing a dyestuff mixture containing or consisting of
I: at least one dyestuff of the formula I

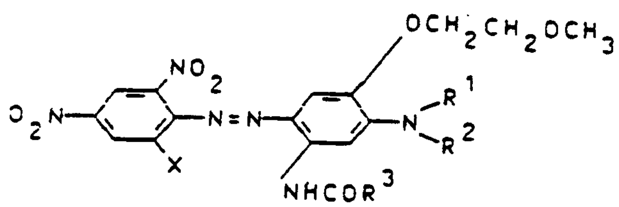 (I)

and
II: at least one dyestuff of the formula II

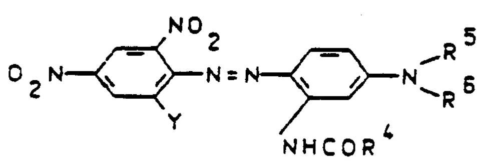 (II)

in which
X and Y are identical or different and denote chlorine or bromine,
$R^1$ denotes hydrogen or one of the radicals listed under $R^5$,
$R^2$ denotes hydrogen or one of the radicals listed under $R^5$,
$R^3$ denotes ethyl, n- or i-propyl, $R^4$ denotes methyl, ethyl, n- or i-propyl,
$R^5$ and $R^6$ are identical or different and denote $C_1$-to-$C_{11}$-alkyl which can be substituted by chlorine, bromine, cyano, phenyl, phenoxy, hydroxyl, ($C_1$-to-$C_4$-alkyl)-carbonyloxy, ($C_1$-to-$C_4$-alkoxy)-carbonyl, phenylcarbonyloxy, ($C_3$-to-$C_5$-alkenyloxy)-carbonyloxy, ($C_1$-to-$C_4$-alkoxy)-carbonyloxy, phenoxycarbonyloxy, tetrahydrofurfuryl, ($C_1$-to-$C_4$-alkyl)-tetrahydrofurfuryl, tetrahydropyronyl or ($C_1$-to-$C_4$-alkyl)-tetrahydropyronyl and/or be interrupted by 1 - 3 O-atoms, $C_1$-to-$C_4$-alkoxy, $C_3$ or $C_4$-alkenyl, cyclohexyl, optionally chlorine-, bromine-, nitro-, cyano-, $C_1$-to-$C_4$-alkyl- or alkoxy-substituted benzyl,
characterized in that previously finished individual dyes of components I and II are mixed with one another in a weight ratio of component I : II = (20 to 99) : (80 to 1), or that unfinished individual dyes of

components I and II are mixed with one another in a weight ratio of component I : II = (20 to 99) : (80 to 1) and are finished subsequently or during mixing.

**2.** Process according to Claim 1, characterized in that the component I and II are chosen such that
$R^1$ denotes hydrogen or ethyl and/or
$R^2$ denotes hydrogen or ethyl and/or
$R^5$ and $R^6$ denote identical or different $C_1$ to $C_4$ alkyl.

**3.** Process according to Claim 1 and/or 2, characterized in that the components I and II are chosen such that
$R^1$ denotes hydrogen and/or
$R^2$ denotes hydrogen or ethyl and/or
$R^3$ denotes ethyl and/or
$R^4$ denotes methyl and/or
$R^5$ denotes ethyl and/or
$R^6$ denotes ethyl and/or
X denotes chlorine and/or
Y denotes bromine.

**4.** Process according to one or more of Claims 1 to 3, characterized in that the dyes of components I and II = (80 to 99) : (20 to 1), preferably (90 to 99) : (10 to 1) are mixed with one another.

**5.** Process according to one or more of Claims 1 to 4, characterized in that component I consists of or contains the dyestuff of the formula III

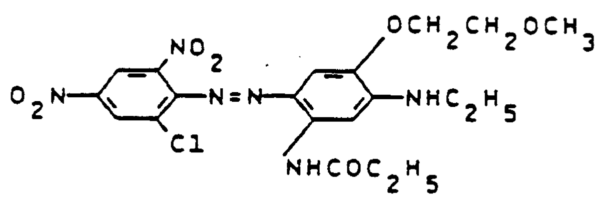

(III)

and that component II consists of or contains the dyestuff of the formula IV

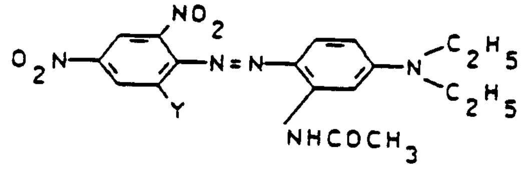

(IV)

and that components I and II are mixed with one another in a weight ratio of I : II = (90 to 99) : (10 to 1).

**6.** Process according to one or more of Claims 1 to 5, characterized in that component I consists of or contains the dyestuff of the formula V

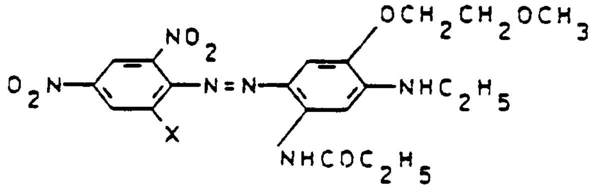

(V)

and that component Ia consists of or contains the dyestuff of the formula VI

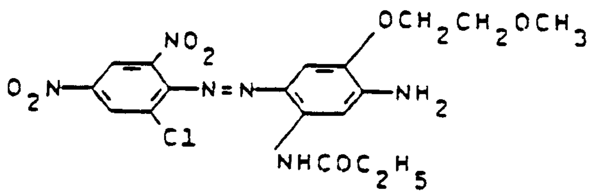

(VI)

and that component II consists of or contains the dyestuff of the formula IV

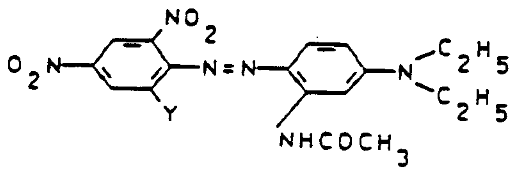

(IV)

and that components I, Ia and II are mixed with one another in a weight ratio of I:Ia:II = (65 to 98) : (15 to 30) : (20 to 1), the weight ratio of (I + Ia) : II being (80 to 99) : (20 to 1).

7. Process according to one or more of Claims 1 to 4, characterized in that component I consists of or contains the dyestuff of the formula III

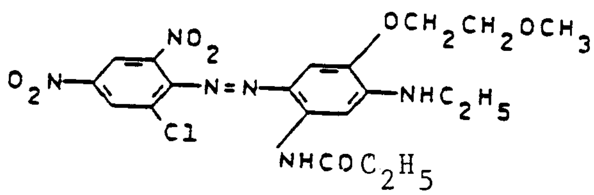

(III)

and that component II consists of or contains the dyestuff of the formula VII

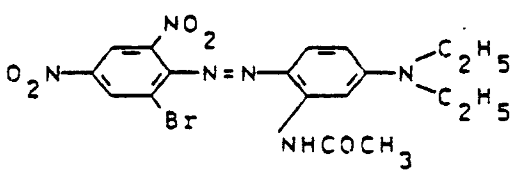

(VII)

and that components I and II are mixed with one another in a weight ratio of I : II = (90 to 99) : (10 to 1).

8. Process according to one or more of Claims 1 to 4, characterized in that component I consists of or contains the dyestuff of the formula III

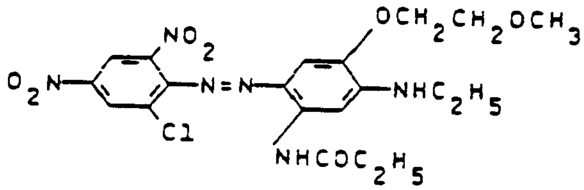

(III)

and that component Ia consists of or contains the dyestuff of the formula VI

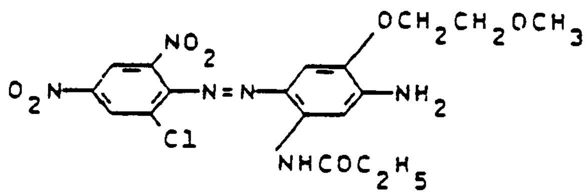

(VI)

and that component II consists of or contains the dyestuff of the formula VII

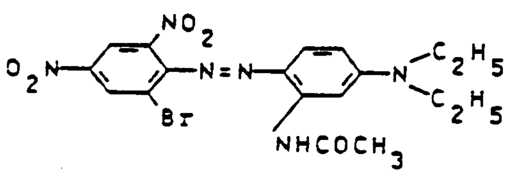

(VII)

and that components I, Ia and II are mixed with one another in a weight ratio of I:Ia:II = (65 to 98) : (15 to 2) : (20 to 1), the weight ratio of (I + Ia):II being (80 to 99) : (20 to 1).

**9.** Process for dyeing and printing synthetic fibres, characterized in that a dyestuff mixture is used which has been prepared according to one or more of Claims 1 to 8.

**Revendications**
**Revendications pour les Etats contractants suivants : CH, LI, DE, FR, GB, IT**

**1.** Mélange de colorants contenant, ou consistant en :
1 : au moins un colorant de formule I

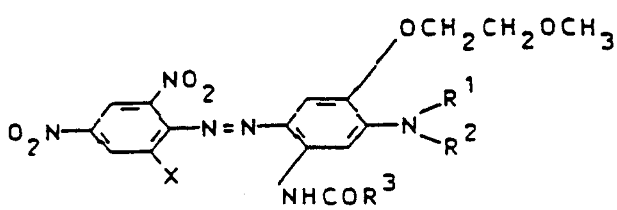

(I)

et
II : au moins un colorant de formule II

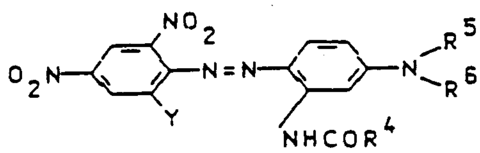

(II)

[formule dans lesquelles :

X et Y sont identiques ou différents et représentent chacun un atome de chlore ou de brome;

$R^1$ représente un atome d'hydrogène ou représente l'un des restes cités à propos de $R^5$ ,

$R^2$ représente un atome d'hydrogène ou l'un des restes cités pour $R^5$,

$R^3$ représente un groupe éthyle, propyle ou isopropyle,

$R^4$ représente un groupe méthyle, éthyle, propyle ou isopropyle,

$R^5$ et $R^6$ sont identiques ou différents et représentent chacun un groupe alkyle en $C_1$ à $C_{11}$ (qui peut porter éventuellement comme substituant un atome de chlore ou de brome ou un groupe cyano, phényle, phénoxy, hydroxy, alkyl (en $C_1$ à $C_4$) carbonyloxy, alcoxy (en $C_1$ à $C_4$) - carbonyle, phénylcarbonyloxy, alcényloxy (en $C_3$ à $C_5$) - carbonyloxy, alcoxy (en $C_1$ à $C_4$)- carbonyloxy, phénoxycarbonyloxy, tétrahydrofurfuryle, alkyl (en $C_1$ à $C_4$)-tétrahydrofurfuryle, tétrahydropyrronyle ou alkyl (en $C_1$ à $C_4$)-tétrapyrronyle et/ou peut éventuellement être interrompu par 1 à 3 atomes d' O , un groupe alcoxy en $C_1$ à $C_4$, alcényle en $C_3$ ou $C_4$, cyclohexyle, benzyle (portant éventuellement comme substituant un atome de chlore ou de brome ou un groupe nitro, cyano, alkyle en $C_1$ à $C_4$ ou alcoxy en $C_1$ à $C_4$) , et le rapport pondéral entre les composants 1:2 vaut de (20 à 99) : (80 à 1).

**2.** Mélange de colorants selon la revendication 2 caractérisé en ce que :

$R^1$ représente un atome d'hydrogène ou un groupe éthyle et/ou

$R^2$ représente un atome d'hydrogène ou un groupe éthyle, et/ou

$R^5$ et $R^6$ sont identiques ou différents et représentent chacun un groupe alkyle en $C_1$ à $C_4$.

**3.** Mélange de colorants selon la revendication 1 et /ou 2, mélange caractérisé en ce que :

$R^1$ représente un atome d'hydrogène et/ou

$R^2$ représente un atome d'hydrogène ou un groupe éthyle, et /ou

$R^3$ représente un groupe éthyle et/ou

$R^4$ représente un groupe méthyle, et/ou

$R^5$ représente un groupe éthyle et/ou

$R^6$ représente un groupe éthyle et/ou

X représente un atome de chlore et/ou

Y représente un atome de brome.

**4.** Mélange de colorants selon une ou plusieurs des revendications 1 à 3, caractérisé en ce que le rapport pondéral entre les composants I:II vaut (80 à 99) : (20 à 1), avantageusement (90:99) : (10 à 1).

**5.** Mélange de colorants selon une ou plusieurs des revendications 1 à 4, caractérisé en ce qu'il contient

I) le colorant de formule III :

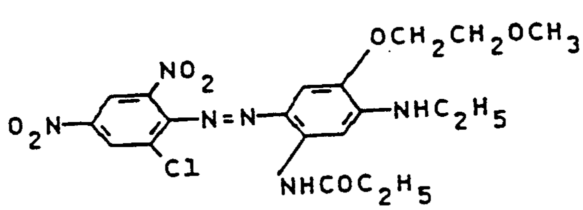

(III)

et

II) le colorant de formule IV

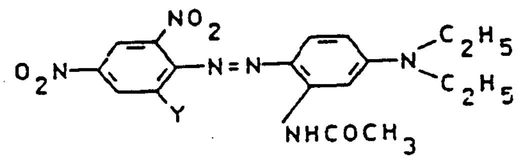

(IV)

selon un rapport pondéral de I:II valant (90 à 99): (10 à 1) ou en ce qu'il consiste en ces colorants.

**6.** Mélange de colorants selon une ou plusieurs des revendications 1 à 5, caractérisé en ce qu'il contient:
I) le colorant de formule V

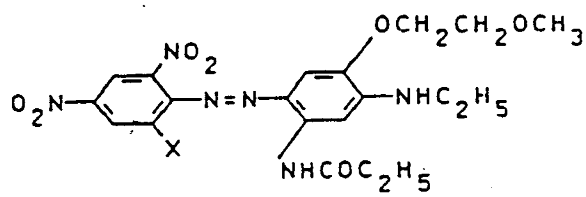

(V)

Ia) le colorant de formule VI

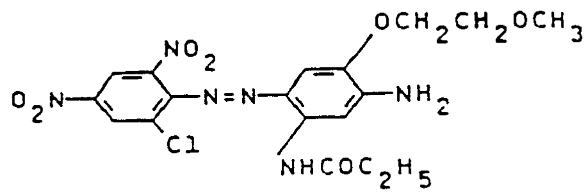

(VI)

II) le colorant de formule IV

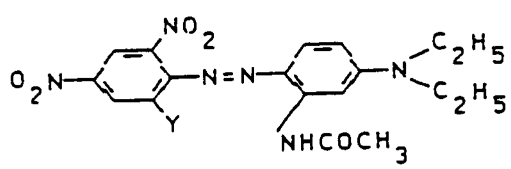

(IV)

selon un rapport pondéral de Ia:II valant (65 à 98): (15 à 30°: (20 à 1) ou en ce qu'il consiste en ces colorants, le rapport pondéral (I + Ia): Ii valant de (80 à 99) : (20 à 1).

**7.** Mélange de colorants selon une ou plusieurs des revendications 1 à 4 , caractérisé en ce qu'il contient le colorant de formule III

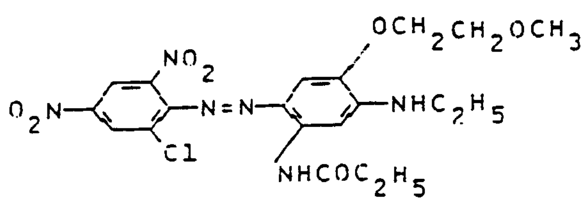

(III)

et
II) le colorant de formule VII

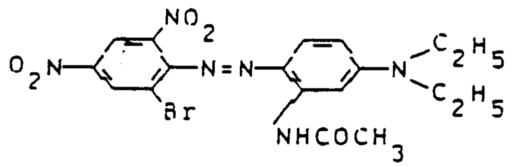

(VII)

selon un rapport pondéral de I:II valant (90 à 99): (10 à 1) ou en ce qu'il consiste en ces colorants .

**8.** Mélange de colorants selon une ou plusieurs des revendications 1 à 4 , caractérisé en ce qu'il contient le colorant de formule III

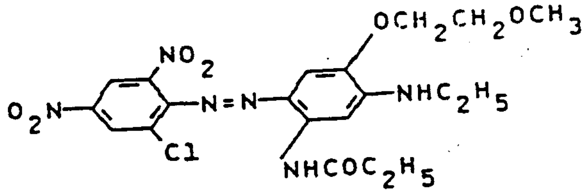

(III)

Ia) le colorant de formule VI

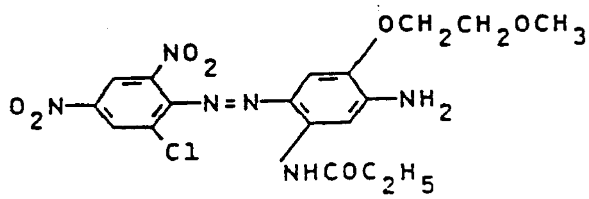

(VI)

II) le colorant de formule VII

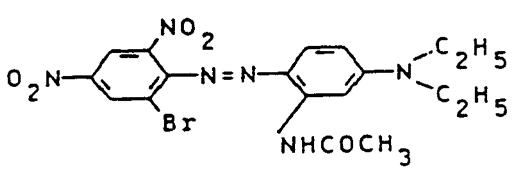

(VII)

selon un rapport pondéral de I:Ia:II valant (65 à 98) : (15 à 2) : (20 à 1) ou en ce qu'il consiste en ces colorants, le rapport pondéral (I + Ia) : II valant de (80 à 99) : (20 à 1).

**9.** Procédé pour préparer un mélange de colorants selon une ou plusieurs des revendications 1 à 8, caractérisé en ce qu'on mélange ensemble les colorants individuels, déjà terminés, des composants I et II ou bien en ce qu'on mélange ensemble des colorants individuels non terminés, des composants I et II et on les termine ensuite ou pendant l'opération de mélangeage.

**10.** Procédé pour teindre et imprimer des fibres de synthèse, caractérisé en ce qu'on utilise un mélange de colorants selon une ou plusieurs des revendications 1 à 8.

**Revendications pour l'Etat contractant suivant : ES**

**1.** Procédé pour préparer un mélange de colorants contenant ou consistant en :

1 : au moins un colorant de formule I

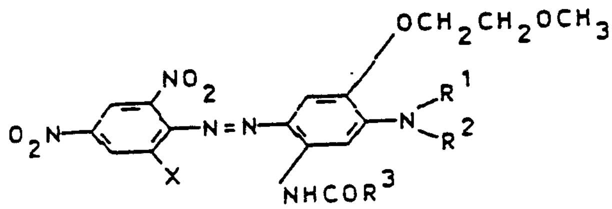

(I)

et

II : au moins un colorant de formule II

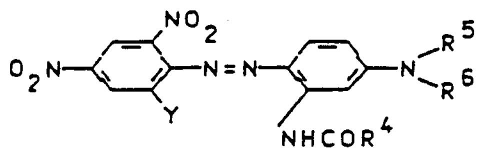

(II)

[formules dans lesquelles :

X et Y sont identiques ou différents et représentent chacun un atome de chlore ou de brome;

$R^1$ représente un atome d'hydrogène ou représente l'un des restes cités à propos de $R^5$ ,

$R^2$ représente un atome d'hydrogène ou l'un des restes cités pour $R^5$,

$R^3$ représente un groupe éthyle, propyle ou isopropyle,

$R^4$ représente un groupe méthyle, éthyle, propyle ou isopropyle,

$R^5$ et $R^6$ sont identiques ou différents et représentent chacun un groupe alkyle en $C_1$ à $C_{11}$ (qui peut porter éventuellement comme substituant un atome de chlore ou de brome ou un groupe cyano, phényle, phénoxy, hydroxy, alkyl (en $C_1$ à $C_4$) carbonyloxy, alcoxy (en $C_1$ à $C_4$) - carbonyle, phénylcarbonyloxy, alcényloxy (en $C_3$ à $C_5$) - carbonyloxy, alcoxy (en $C_1$ à $C_4$)- carbonyloxy, phénoxycarbonyloxy, tétrahydrofurfuryle, alkyl (en $C_1$ à $C_4$)-tétrahydrofurfuryle, tétrahydropyrronyle ou alkyl (en $C_1$ à $C_4$)-tétrapyrronyle et/ou peut éventuellement être interrompu par 1 à 3 atomes de grand 0), un groupe alcoxy en $C_1$ à $C_4$, alcényle en $C_3$ ou $C_4$, cyclohexyle, benzyle (portant éventuellement comme substituant un atome de chlore ou de brome ou un groupe nitro, cyano, alkyle en $C_1$ à $C_4$ ou alcoxy en $C_1$ à $C_4$) caractérisé en ce qu'on mélange ensemble des colorants individuels déjà terminés des composants I et II, selon un rapport pondéral entre composants I:II valant (20 à 99) :(80 à 1) ou en ce qu'on mélange ensemble des colorants individuels non terminés, des composants I et II, selon un rapport de mélange de composants 1:2 valant (20 à 99) : (80 à 1), puis l'on effectue la finition, ou bien on effectue cette finition pendant le mélangeage.

**2.** Procédé selon la revendication 1, caractérisé en ce qu'on choisit les composants I et II, de manière que

$R^1$ représente un atome d'hydrogène ou un groupe éthyle et/ou

$R^2$ représente un atome d'hydrogène ou un groupe éthyle et/ou

$R^5$ et $R^6$, identiques ou différents, représentent chacun un groupe alkyle en $C_1$ à $C_4$.

**3.** Procédé selon la revendication 1 et /ou 2, caractérisé en ce qu'on choisit les composants I et II, de manière que ,

$R^1$ représente un atome d'hydrogène et /ou

$R^2$ représente un atome d'hydrogène ou un groupe éthyle, et/ou

$R^3$ représente un groupe éthyle et/ou

$R^4$ représente un groupe méthyle et/ou

$R^5$ représente un groupe éthyle et/ou

$R^6$ représente un groupe éthyle et/ou
X représente un atome de chlore et/ou
Y représente un atome de brome

**4.** Procédé selon une ou plusieurs des revendications 1 à 3, caractérisé en ce qu'on mélange ensemble les colorants des composants I et II selon un rapport de (80 à 99) :(20 à 1), avantageusement un rapport de (90 à 99):(10 à 1).

**5.** Procédé selon une ou plusieurs des revendications 1 à 4, caractérisé en ce que le composant I consiste en le colorant de formule III

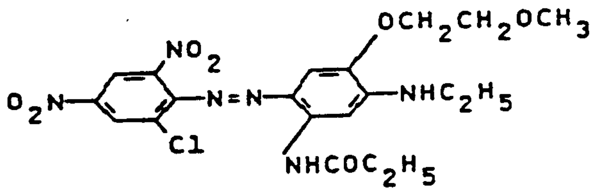

(III)

ou contient ce colorant, et le composant II consiste en le colorant de formule IV

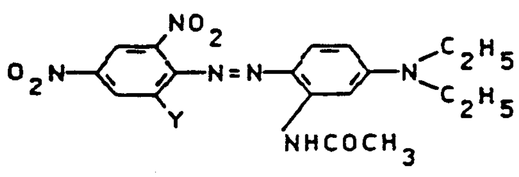

(IV)

ou contient ce colorant, et en ce qu'on mélange l'un avec l'autre les composants I et II selon un rapport pondéral de I:II valant (90 à 99) :(10 à 1).

**6.** Procédé selon une ou plusieurs des revendications 1 à 5, caractérisé en ce que le composant I consiste en le colorant de formule V

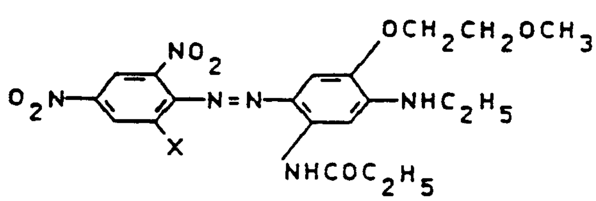

(V)

ou contient ce colorant, et en ce que le composant Ia consiste en le colorant de formule VI :

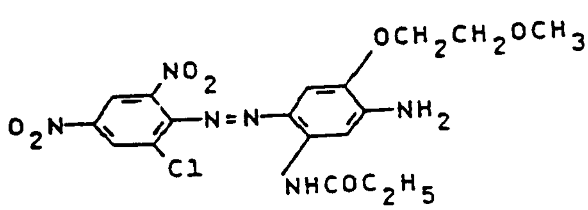

(VI)

ou contient ce colorant , et en ce que le composant II consiste en le colorant de formule IV

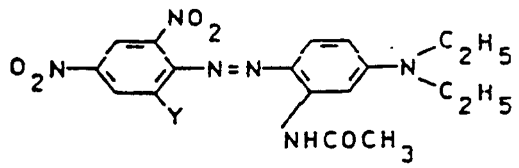

(IV)

ou contient ce colorant,

et en ce que l'on mélange les composants Ia, et II selon un rapport pondéral de I :Ia : II valant (65 à 98): (15 à 30) : (20 à 1) , le rapport pondéral (I + Ia) : II valant (80 à 99) : (20 à 1).

**7.** Procédé selon une ou plusieurs des revendications 1 à 4, caractérisé en ce que le composant I consiste en le colorant de formule III

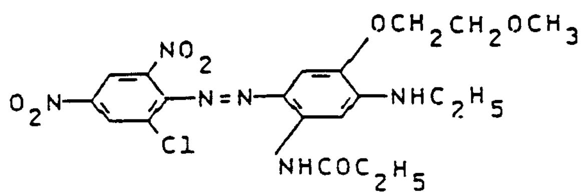

(III)

ou contient ce colorant, et le composant II consiste en le colorant de formule VII

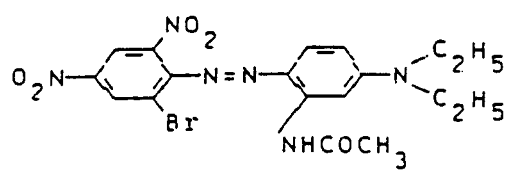

(VII)

ou contient ce colorant, et en ce que l'on mélange les composants I et II selon un rapport pondéral de I:II valant (90 à 99) : (10:1) .

**8.** Procédé selon une ou plusieurs des revendications 1 à 4, caractérisé en ce que le composant I consiste en le colorant de formule III

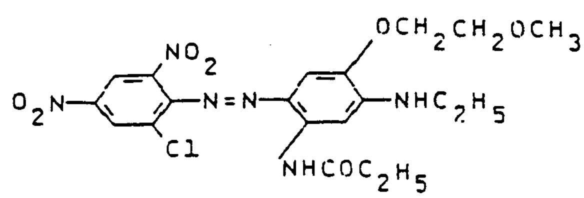

(III)

ou contient ce colorant et en ce que le composant Ia consiste en le colorant de formule VI

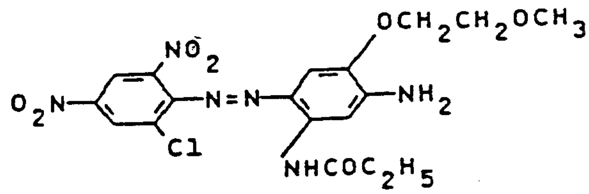

(VI)

ou contient ce colorant, et en ce que le composant II consiste en le colorant de formule VII

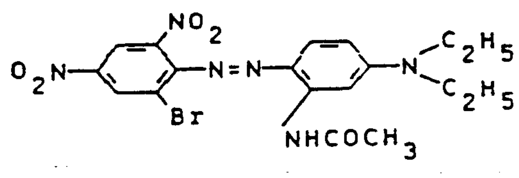

(VII)

ou contient ce colorant, et en ce que l'on mélange les composants I, Ia et II selon un rapport pondéral de I:Ia:II valant (65 à 98) : (15 à 2) : (20 à 1), le rapport pondéral (I + Ia) : II valant (80 à 99) : (20 à 1).

**9.** Procédé pour teindre et imprimer des fibres de synthèse, caractérisé en ce qu'on utilise un mélange de colorants qui a été préparé par un procédé selon l'une des revendications 1 à 8.